# EUROPEAN PATENT SPECIFICATION

(11) **EP 1 803 005 B1**
(45) Date of publication and mention of the grant of the patent: **26.09.2012**
(21) Application number: 04796253.5
(22) Date of filing: 25.10.2004
(51) Int. Cl.: G02B 6/10, G02B 6/02

(54) **CHIRAL IN-FIBER POLARIZER APPARATUS AND METHOD**
CHIRALE FASERINTERNE POLARISIERERVORRICHTUNG UND VERFAHREN
PROCEDE ET APPAREIL POLARISEUR CHIRAL CONTENU DANS UNE FIBRE

(30) Priority: 24.10.2003 US 514459 P
(43) Date of publication of application: 04.07.2007
(73) Proprietor: Chiral Photonics, Inc., Pine Brook, NJ 07058 (US)
(72) Inventor: KOPP, Victor ll'ich, Flushing, NY 11354 (US); TCHOURIKOV, Victor, West Patterson, NJ 07424 (US)
(74) Representative: Szabo, Zsolt
(86) International application number: PCT/US2004/035225
(87) International publication number: WO 2006/046947

(56) References cited:
- WO-A1-02/03115
- WO-A1-97/26221
- US-A1- 2003 118 265
- US-B1- 6 169 153
- US-B1- 6 271 952
- US-B1- 6 271 952
- US-B1- 6 465 153

## Description

### FIELD OF THE INVENTION

The present invention relates generally to polarizers, and more particularly to an in-fiber polarizer based on a chiral optical fiber.

### BACKGROUND OF THE INVENTION

Any device that requires polarized light uses one or more polarizers. Polarizers have many industrial applications. For example, polarizers may be utilized in electro-optical modulators and laser subsystems. In essence, a polarizer eliminates an undesirable light component of a first polarization, and allows a desirable light component of a second polarization to pass through.

Of particular interest is the use of polarizers as in-line modules in optical fibers. Previously known in-line polarizers typically comprise an assembly with a first lens following a first optical fiber for collimating the light emerging from the fiber. The collimated light then passes though a polarizer plate and is then focused by a second lens into a second optical fiber. The main disadvantage of this type of polarizer is that it is relatively expensive and difficult to construct. Furthermore, the lens-based polarizer interrupts the optical fiber leading to optical loss and undesirable reflection. Finally, the lens-based polarizer introduces a device into the fiber that is much larger than the fiber, thereby-causing potential space and size issues.

One attempt to solve the above problems was the development of another in-line fiber polarizer that was constructed by wrapping the optical fiber in several loops around a circular member before allowing the fiber to continue on its way. This arrangement eliminated some of the drawbacks of the previously known lens-based polarizer - for example, this was a true in-fiber device that did not interrupt the fiber with a much larger device. However, the coil-based polarizer suffered from another significant drawback - the coil element around which the fiber needed to be wrapped was typically many centimeters in diameter. Thus, while not as unwieldy as a lens-based polarizer, the coil-based polarizer was still very bulky and difficult or impossible to use in many applications.

A novel in-fiber polarizer, that advantageously solved all of the problems of the prior art polarizers was disclosed in a commonly assigned U.S. Patent No. 6,721,469, issued on April 13, 2004, and entitled "Chiral In-Fiber Adjustable Polarizer Apparatus and Method" (hereinafter the "Adjustable Polarizer patent"), which is hereby incorporated by reference in its entirety. That novel adjustable polarizer worked with circularly polarized light and utilized a fiber component that functioned as a quarter-wave plate to convert circular polarization into linear polarization over a relatively narrow frequency band. The fact that polarization conversion only happens across a narrow frequency band, is one of the chief limitations and drawbacks of quarter-wave plates and quarter-wave plate-type devices. In addition, since most practical applications utilize linearly polarized light (for example transmitted through standard polarization-maintaining fibers), the polarizer disclosed in the Adjustable Polarizer patent required conversion of incoming light into circularly polarized light prior to entering the polarizer.

It would thus be desirable to provide an in-line polarizer that does not interrupt an optical fiber with a larger structure and that is capable of operating with an unpolarized light input. It would further be desirable to provide an in-line polarizer having a low insertion loss, and a desirable extinction ratio within a desirable spectral range. It would also be desirable to provide an in-line polarizer that is inexpensive and easy to fabricate.

### BRIEF DESCRIPTION OF THE DRAWINGS

FIG. 1 is a schematic diag ram of a side view of first and second embodiments of the chiral in-fiber polarizer of the present invention;
FIG. 2 is a schematic diagram of a cross-section view of an exemplary chiral fiber structure of the chiral in-fiber polarizer of FIG. 1;
FIG. 3 is a schematic diagram of a side view of a third embodiment of the chiral in-fiber polarizer of the present invention configured for minimizing insertion loss of incident light; and
FIG. 4 is a schematic diagram of a side view of a fourth embodiment of the chiral in-fiber polarizer of FIG. 1, configured for further maximizing the extinction ratio thereof.

### SUMMARY OF THE INVENTION

The present invention is directed to a novel chiral in-fiber polarizer that is based on a specially configured optical chiral fiber structure, for example having advantageous optical properties similar to a cholesteric liquid crystal (CLC) structure. The chiral fiber structure used in the inventive chiral in-fiber polarizer achieves optical properties similar to a CLC structure because it satisfies the requirement that in a CLC structure the pitch of the structure is twice its period. This is accomplished by using a chiral fiber structure having geometric birefringence with 180 degree symmetry. Such properties may be obtained by imposing two identical coaxial helixes along a fiber structure, where the second helix is shifted by h alf of the structure's pitch forward from the first helix. Such structures are described in greater detail in the co-pending commonly assigned U.S. Patent applications entitled "Apparatus and Method for Manufacturing Fiber Gratings", "Apparatus and Method of Manufacturing Helical Fiber Bragg Gratings", "Apparatus and Method for Fabricating Helical Fiber Bragg Gratings", "Helical Fiber Bragg Grating", and "Long Period Chiral Fiber Grating and Apparatus and Method of Fabrication Thereof", all of which are hereby incorporated by reference herein in their entirety. Several embodiments of the inventive chiral in-fiber polarizer are discussed below.

A chiral in-fiber polarizer implemented in a chiral fiber structure is provided in accordance with the present invention. The chiral fiber is selected with a predetermined handedness and scatters the circularly polarized light matching its handedness while transmitting circularly polarized light of opposite handedness.

In summary, the chiral polarizer comprises a chiral fiber structure having an optical chiral fiber core of a predetermined handedness (i.e., right or left), surrounded by a cladding, and includes an entry end for receiving incident light, and an exit end for outputting polarized light. The handedness of the chiral fiber structure is important because the structure will scatter circular or elliptical components of incident light matching its handedness and will pass through the components of opposite handedness.

The key novel feature of the inventive chiral fiber polarizer is a pitch variation along its length between the entry and exit ends in accordance with a predetermined desirable pitch profile. The pitch profile may be advantageously selected to correspond to one or more predetermined pitch configurations, may be determined in accordance with one or more mathematical functions, or may be random. In accordance with the present invention, at least one of various parameters of the chiral structure, including, but not limited to, the core and cladding refractive indices and sizes, and the pitch profile, may be configured and selected to achieve an optimized extinction ratio within a desired spectral range, thereby substantially eliminating the undesirable polarization component of the incident light entering the polarizer.

In one embodiment of the present invention, the above goal is accomplished by selecting and configuring the pitch profile such that an inverse value of the chiral structure's pitch at the exit end of the structure is substantially zero, and at a higher value at the entry end. In an alternate embodiment of the first embodiment of the present invention, the pitch profile is selected and configured such that the inverse value of the chiral structure's pitch at the entry end of the structure is substantially zero, and at a higher value at the exit end. In a second embodiment of the present invention, the inverse value of the chiral structure's pitch at the entry end is greater than the inverse value of the chiral structure's pitch at the exit end. In an alternate embodiment of the second embodiment of the present invention, the pitch profile is selected and configured such that the inverse value of the chiral structure's pitch at the exit end is greater than the inverse value of the chiral structure's pitch at the entry end. In a third embodiment of the inventive chiral polarizer, the pitch profile is selected and configured such that the inverse value of the chiral structure's pitch is zero at both the entry end the exit ends of the chiral structure. In a fourth embodiment of the present invention, multiple pitch profiles can be imposed on sequential regions of a chiral optical fiber structure, in essence forming a global pitch profile that essentially functions as two or more sequential novel chiral polarizer structures with alternating regions where inverse pitch is substantially equal to zero. The various above-described embodiments of the present invention, each have specific advantages making them advantageous in particular types of applications.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims.

### DETAILED DESCRIPTION OF THE PREFERRED EMBODIMENTS

The present invention is directed to a chiral in-fiber polarizer implemented in a chiral fiber structure. In summary, the chiral polarizer comprises an optical fiber core surrounded by a cladding and includes an entry end for receiving incident light and an exit end for outputting polarized light. The novel chiral fiber polarizer also includes a pitch variation along its length between the entry and exit ends in accordance with a predetermined desirable pitch profile. The pitch profile may be advantageously selected to correspond to one or more predetermined pitch configurations, may be determined in accordance with one or more mathematical functions, or may be random. In accordance with the present invention, at least one of various parameters of the chiral structure, including, but not limited to, the core and cladding refractive indices and sizes, and the pitch profile, may be configured and selected to substantially eliminate the undesirable polarization component of the incident light by achieving an optimized extinction ratio within a desired spectral range.

In one embodiment of the present invention, the above goal is accomplished by selecting and configuring the pitch profile such that an inverse value of the chiral structure's pitch at the exit end of the structure is substantially zero, and at a higher value at the entry end. This arrangement is advantageous when it is desirable to filter out an elliptically polarized component of the incident light, and it is also desirable to produce a substantially linearly polarized light component at the exit end.

In an alternate embodiment of the first embodiment of the present invention, the pitch profile is selected and configured such that the inverse value of the chiral structure's pitch at the entry end of the structure is substantially zero, and at a higher value at the exit end. This arrangement is advantageous when it is desirable to filter out a linearly polarized component of the incident light, and it is also desirable to produce an elliptically polarized light component at the exit end.

In a second embodiment of the present invention, the inverse value of the chiral structure's pitch at the entry end is greater than the inverse value of the chiral structure's pitch at the exit end. This arrangement is advantageous when it is desirable to filter out an elliptically polarized component of the incident light, and it is also desirable to produce an elliptically polarized light component at the exit end having a higher eccentricity than the elliptically polarized light components at the entry end.

In an alternate embodiment of the second embodiment of the present invention, the pitch profile is selected and configured such that the inverse value of the chiral structure's pitch at the exit end is greater than the inverse value of the chiral structure's pitch at the entry end. This arrangement is advantageous when it is desirable to filter out an elliptically polarized component of the incident light, and it is also desirable to produce an elliptically polarized light component at the exit end having a lower eccentricity than the elliptically polarized light components at the entry end.

In a third embodiment of the inventive chiral polarizer, the pitch profile is selected and configured such that the inverse value of the chiral structure's pitch is zero at both the entry end the exit ends of the chiral structure. This arrangement is advantageous when it is desirable to filter out a linearly polarized component of the incident light, and it is also desirable to produce a linearly polarized light component at the exit end. In particular, this configuration of the inventive ch iral structure can serve to optimize or "cleanup" incident linearly polarized light of one orientation by virtually eliminating the undesirable linearly polarized light component of the other orientation while minimizing the insertion loss of the incident linearly polarized light.

In a fourth embodiment of the present invention, multiple pitch profiles can be imposed on sequential regions of a chiral optical fiber structure, in essence forming a global pitch profile that essentially functions as two or more sequential novel chiral polarizer structures with alternating regions where inverse pitch is substantially equal to zero.

Before describing the inventive polarizer in greater detail, it would be advantageous to provide an explanation of the scientific principles behind chiral fibers. A chiral fiber is a novel structure that mimics cholesteric liquid crystal (CLC) properties - the chiral periodic photonic band gap structure -- in a fiber form. A commonly assigned co-pending U.S. Patent Application entitled "Helical Fiber Bragg Grating" (hereinafter "HFBG")) which is hereby incorporated by reference in its entirety, disclosed the advantageous implementation of the essence of a chiral periodic photonic band gap (hereinafter "PBG") structure in an optical fiber. This novel approach captured the superior optical properties of cholesteric liquid crystals while facilitating the manufacture of the structure in a continuous (and thus easier to implement) process.

While the chiral in-fiber polarizer of the present invention is described with reference to the above-incorporated embodiments of inventive optical fibers having CLC-like optical properties derived from their helical or double helical structures, it should be noted that the inventive chiral in-fiber polarizer may be advantageously constructed utilizing any optical fiber having chiral properties regardless of how those properties are achieved. Furthermore, it should be noted that the various advantageous CLC-related techniques disclosed in the above-incorporated commonly assigned co-pending U.S. Patent Applications may be readily adapted to, and advantageously utilized in conjunction with, the inventive chiral polarizer as a matter of design choice without departing from the spirit of the invention.

It is well established that the term of art "elliptically polarized light" may refer to either linearly polarized light, circularly polarized light, or any type of light polarization in-between. Thus, any incident light entering the inventive polarizer may be said to include two elliptically polarized components (and thus include either two linear or circular polarized components or anything in-between), where the presence of only one component is desirable at the other end of the polarizer. It should be understood, however, than in a real-world implementation there will always be some minimal quantity of undesirable components at the exit end of the polarizer. Accordingly, the description of the various embodiments of the present invention refer to elliptically polarized light as a generic term by way of example for the purpose of simplification, rather than engaging in repetition of the inventive polarizer's advantageous applicability to both linear and circularly polarized light.

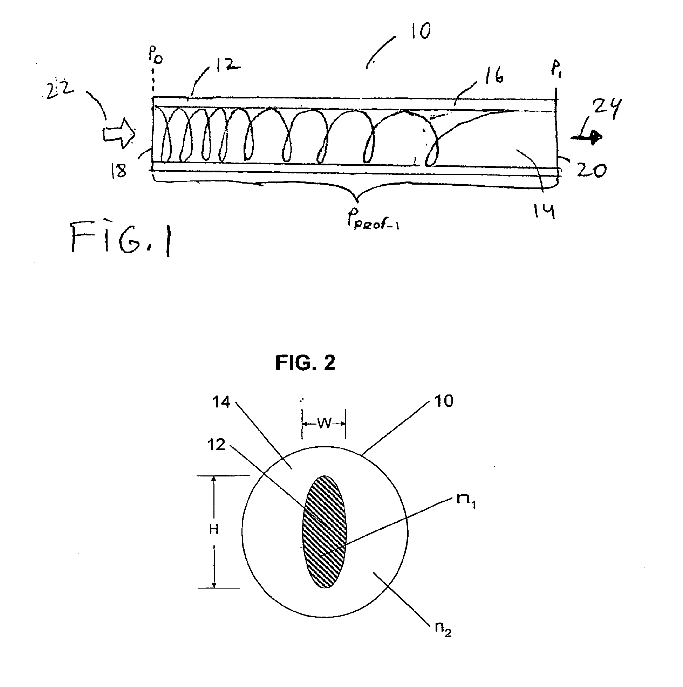

Additionally, while the term "incident light" as used in conjunction with the description of the various embodiments of the present invention, is referred to as having two polarization components (i.e., one desirable and one undesirable), it should be understood to one skilled in the art that the inventive polarizer (in its various embodiments) may be readily utilized in cases where the incident light only has a single polarization component (i.e., polarized incident light), in which case the inventive polarizer either blocks the incident light, passes it through without affecting it, or passes it through while changing some characteristics of its polarization, depending on the type of polarization of the polarized incident light and the configuration of the polarizer's structure, as described below in connection with FIGs. 1 to 4.

The essence of the fi rst embodiment of the present invention is that a chiral optical fiber, having an entry end and an exit end, and configured with a pitch profile that results in the inverse pitch (i.e., when pitch = P, inverse pitch = 1/P) being substantially equal to zero at the exit end and greater than zero at the entry end, substantially scatters one of the undesirable elliptically polarized components of incident light, while converting the desirable elliptically polarized component of incident light into a corresponding linearly polarized light component. Preferably, both the conversion of the undesirable elliptically polarized component into a corresponding undesirable linearly polarized component, and scattering thereof are synchronized with one another. It should be noted that any area having an inverse pitch substantially equal to zero corresponds to an area having properties of a birefringent fiber which is similar to a standard polarization maintaining fiber.

Referring now to FIGs. 1 and 2, a first embodiment of an inventive chiral in-fiber polarizer 10 is shown. The chiral polarizer 10 comprises a chiral fiber structure 12 having an outer cladding 16, an inner central core 14, an entry end 18, and an exit end 20. Both the core 14 and the cladding 16 may be composed from a variety of optical materials (e.g. glass or plastic) having refractive indices n₁ and n₂, respectively, selected as a matter of design choice as further described below. In the exemplary embodiment shown in FIGs. 1 and 2, in accordance with the HFBG patent application, the core 14 is twisted to form a double helix structure. The specific cross-section shape and size (height H and width W) of the core 14 may be selected as a matter of design choice as long as the base core 14 structure maintains 180 degree symmetry such that when it is twisted, a double helix structure is formed. As noted above, the core 14 may be any chiral structure, not just the one disclosed in the HFBG patent application - for example, the core 14 may be constructed by imposing double helix grooves on a cylindrical core, by wrapping the core with a dielectric material, or a combination of the two.

The handedness of the core 14 may be selected as a matter of design choice. Because the chiral polarizer 10 is essentially in the form of an optical fiber, it may be inserted or spliced advantageously into an optical fiber line without interrupting the line and without causing a change in the diameter of the fiber at the site of the chiral polarizer 10.

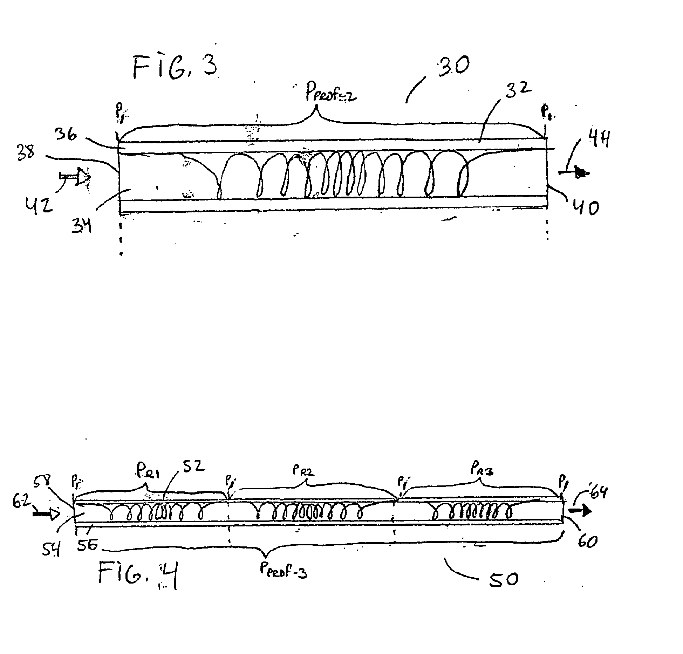

In accordance with the present invention, the pitch of the chiral structure 12 is preferably distributed between the entry and exit ends 18, 20 in accordance with a predetermined pitch profile P_{prof-1} starting with P₀ at the entry end 18 and ending with P₁ at the exit end 20. Preferably, an exit inverse pitch (1/P) at the exit end 20 is substantially zero, while an entry inverse pitch (1/P₀) is greater than zero. This general principle of the first embodiment of the present invention (i.e. a predetermined pitch profile distributed between the entry and exit ends, where 1/ P₁ at the exit end is substantially zero) is also applicable to several other embodiments of the present invention, discussed below in connection with FIGs. 3 and 4 (except that in those embodiments, more than one region of the chiral fiber structure has a an inverse pitch of zero).

To achieve polarization in a desired spectral range, the pitch profile P_{prof-1} may be selected and configured as a matter of design choice from one or more of the following pitch configurations, as long as the inverse pitch at the exit end is substantially equal to zero:
1) a chiral long period grating pitch,
2) a pitch corresponding to a non-resonant scattering band,
3) a pitch region corresponding to a chirped chiral fiber grating,
4) a pitch region corresponding to an apodized chiral fiber grating, 5) a pitch variation determined in accordance with at least one predetermined mathematical function, and
6) a random pitch variation.

When incident light 22, having one desirable and one undesirable elliptically polarized components, enters the entry end 18, the chiral structure 12 substantially scatters the undesirable elliptically polarized component of the incident light 22 while converting it into an undesirable linearly polarized light component, and while converting, without scattering, the desirable elliptically polarized component into a corresponding desirable linearly polarized light component 24 which emerges from the exit end 20. Preferably, both the conversion of the undesirable elliptically polarized component into a corresponding undesirable linearly polarized component, and scattering thereof are synchronized with one another. In this case synchronization of scattering and conversion means that only undesirable component is scattered and the desirable component is being converted without scattering substantially at any particular cross-section of the chiral structure 12.

Preferably one or more of the following chiral structure 12 parameters are selected and configured to optimize the extinction ratio of the undesirable elliptically polarized light component: core 14 cross-section shape, core 14 size (H, W), core 14 refractive index n₁, cladding 16 size, cladding 16 refractive index n₂, and the pitch profile P_{prof-1} are selected and configured to achieve the desired extinction ratio in the desired predetermined spectral range. This embodiment of the chiral polarizer 10 is thus advantageous when it is desirable to filter out an elliptically polarized component of the incident light, and it is also desirable to produce a substantially linearly polarized light component at the exit end.

In an alternate embodiment of the chiral polarizer 10 of FIG. 1, the pitch profile P_{prof-1} is selected and configured such that the exit inverse pitch (1/P₁) at the exit end 20 is greater than zero, while the entry inverse pitch (1/P₀) at the entry end 18 is substantially zero. In this case, when the incident light 22 has one or two linearly polarized components, output at the exit end 20 will be a desirable elliptically polarized component (not shown), and if the exit inverse pitch (1/P₁) inverse pitch is increased as a matter of design choice, the eccentricity of the exiting elliptically polarized component will proportionally decrease bringing it closer to a circularly polarized component. This alternate embodiment of the chiral polarizer 10 is thus advantageous when it is desirable to filter out an elliptically polarized component of the incident light 22, and it is also desirable to produce a substantially elliptically polarized light component at the exit end 20.

In a second embodiment of the chiral polarizer 10 of FIG. 1, the pitch profile P_{prof-1} is selected and configured such that the exit inverse pitch (1/P₁) at the exit end 20 is less than the entry inverse pitch (1/P₀) at the entry end 18, but neither inverse pitch is substantially equal to zero. In this case, output at the exit end 20 will be a desirable elliptically polarized component (not shown) of higher eccentricity than the incident light components at the entry end 18, and if the exit inverse pitch (1/P₁) inverse pitch is increased as a matter of design choice, the eccentricity of the exiting elliptically polarized component will decrease bringing it closer to a circularly polarized component. This second embodiment of the chiral polarizer 10 of FIG. 1, is thus advantageous when it is desirable to filter out an elliptically polarized component of the incident light 22, and it is also desirable to produce an elliptically polarized light component at the exit end 20, having a higher eccentricity than the elliptically polarized light components at the entry end 18.

In an alternate embodiment of the second embodiment of the chiral polarizer 10 of FIG. 1, the pitch profile P_{prof-1} is selected and configured such that the exit inverse pitch (1/P₁) at the exit end 20 is greater than the entry inverse pitch (1/P₀) at the entry end 18, but neither inverse pitch is substantially equal to zero. In this case, output at the exit end 20 will be a desirable elliptically polarized component (not shown) of lower eccentricity than the incident light components at the entry end 18, and if the exit inverse pitch (1/P₁) is increased as a matter of design choice, the eccentricity of the exiting elliptically polarized component will decrease bringing it closer to a circularly polarized component. This arrangement is advantageous when it is desirable to filter out an elliptically polarized component of the incident light, and it is also desirable to produce an elliptically polarized light component at the exit end 20 having a lower eccentricity than the elliptically polarized light components at the entry end 18.

Referring now to FIG. 3, a third embodiment of an inventive chiral in-fiber polarizer is shown as a chiral polarizer 30. The chiral polarizer 30 is advantageous when it is: (1) desirable to filter out a linearly polarized component of the incident light, (2) desirable to produce a linearly polarized light component at the exit end, and (3) desirable to achieve optimization or "cleaning-up" of linearly polarized light.

The chiral polarizer 30 comprises a chiral fiber structure 32 having an outer cladding 36, an inner central core 34, an entry end 38, and an exit end 40. Both the core 34 and the cladding 36 may be composed from a variety of optical materials (e.g. glass or plastic) having refractive indices n₁ and n₂, respectively, selected as a matter of design choice as further described below. Similarly to the chiral polarizer 10 of FIGs. 1 and 2, the chiral structure 32 may be formed as a double helix structure or other structure with similar properties. Essentially, the chiral structures 12 and 32 are similar other than their respective pitch profiles.

The pitch of the chiral structure 32 is preferably distributed between the entry and exit ends 38, 40 in accordance with a predetermined pitch profile P_{prof-2} starting with P₁ at the entry end 38 and ending with P₁ at the exit end 40. Preferably, both the entry and exit inverse pitches (1/P₁) at the respective entry and exit ends 38, 40 are substantially equal to zero.

To achieve polarization in a desired spectral range, and to minimize insertion loss of incident light 42, the pitch profile P_{prof-2} may be selected and configured as a matter of design choice from one or more of the following pitch configurations, as long as the inverse pitch values at the entry and exit ends are substantially equal to zero:
1) a chiral long period grating pitch,
2) a pitch corresponding to a non-resonant scattering band,
3) a pitch region corresponding to a chirped chiral fiber grating,
4) a pitch region corresponding to an apodized chiral fiber grati ng, 5) a pitch variation determined in accordance with at least one predetermined mathematical function, and
6) a random pitch variation.

When incident light 42, having one desirable and one undesirable linearly polarized components, enters the entry end 38, the chiral structure 32 first converts both linearly polarized components of the incident light into corresponding elliptically polarized components and then converts the elliptically polarized components into corresponding resulting linearly polarized components, while simultaneously substantially scattering the undesirable elliptically polarized component, such that only the desirable resulting linearly polarized component 44 emerges at the exit end 40. Preferably, both the conversion of the undesirable linearly polarized component into a corresponding undesirable elliptically polarized component, and then conversion back into the undesirable linearly polarized component, and scattering of the undesirable elliptically polarized component thereof are synchronized with one another.

Furthermore, preferably one or more of the following chiral structure 32 parameters are selected and configured to optimize the extinction ratio of the undesirable elliptically polarized light component: core 34 cross-section shape, core 34 size (H, W), core 34 refractive index n₁, cladding 36 size, cladding 36 refractive index n₂, and the pitch profile P_{prof-2} are selected and configured to achieve the desired extinction ratio in the desired predetermined spectral range, while minimizing insertion loss of incident light 42.

In real world applications, the undesirable polarization component is never entirely eliminated. Thus, the value of an "extinction ratio", measured in dB, is used to indicate the relative elimination of the undesirable polarization component with respect to the desirable polarization component occurring within a predetermined desirable spectral range selected as a matter of design choice. A desirable extinction ratio is advantageous because it indicates a decreased presence of the undesirable polarization component. The synchronized conversion and scattering technique of the polarizer of the present invention advantageously optimizes the extinction ratio of polarized light components in the desirable spectral range.

Minimization of insertion loss during polarization is likewise important for certain applications, for example when incident light is linearly polarized arriving at the entry end of the novel polarizer via a polarization maintaining fiber, and the objective is to optimize or "clean up" the incident linearly polarized light by eliminating as much of the undesirable polarization component of the other orientation (by optimizing the extinction ratio). Having the inverse pitch of zero at the entry end as well as at the exit end of the novel chiral structure, in this embodiment of the present invention, enables minimization of the insertion loss because the undesirable linearly polarized light component is simultaneously converted into elliptically polarized light and back to linearly polarized light while being scattered. This approach preserves the desirable linearly polarized light component while substantially eliminating the undesirable linearly polarized light component, thus minimizing insertion loss.

Referring now to FIG. 4, a fourth embodiment of the chiral polarizer 30 is shown as a chiral polarizer 50. The chiral polarizer 50 is advantageously configured for working with linearly polarized incident light and is especially useful when optimization or "cleaning-up" of linearly polarized light is desired with an extremely desirable extinction ratio as well as a minimal insertion loss. The chiral polarizer 50 comprises a chiral fiber structure 52 having an outer cladding 56, an inner central core 54, an entry end 58, and a n exit end 60. In essence, the chiral fiber structure 52 has a pitch profile P_{prof-3} that includes two or more regions having individual pitch profiles configured as if multiple sequential chiral fiber structures 32 were formed as a single unit - i.e., the entry and exit ends of each region are configured with the inverse pitch being zero. By way of example, FIG, 4 shows three such regions having respective pitch profiles P_{R1}, P_{R2}, and P_{R3}. It should be noted that the number of regions with individual pitch profiles that make up the pitch profile P_{prof-3} may be selected as a matter of design choice without departing from the spirit of the invention. When incident light 62 having two linearly polarized orthogonal components enters the entry end 58, it is converted to elliptically polarized light and back to linearly polarized light, while simultaneously preserving the desired polarization component and scattering the undesirable polarization component, several times, once in each region, such that the emerging desirable linearly polarized light component 64 has minimal loss as compared to the incident light 62, and has a greatly optimized extinction ratio with respect to the scattered undesirable polarization component.

The various inventive chiral polarizer embodiments shown in FIGS. 1-4 thus address all of the disadvantages of the previously known in-line polarizers because they: operate with optimized extinction ratios within desired spectral ranges, minimize the insertion loss in case of polarizers 30 and 50, are easy and inexpensive to fabricate, and do not change the size of the optical fiber in which they are used.

Thus, while there have been shown and described and pointed out fundamental novel features of the invention as applied to preferred embodiments thereof, it will be understood that various omissions and substitutions and changes in the form and details of the devices and methods illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. It is the intention, therefore, to be limited only as indicated by the scope of the claims appended hereto.

## Claims

1. A chiral polarizer for achieving polarization of incident light, the incident light having two orthogonal elliptically polarized components of a first eccentricity, comprising:
an elongated chiral optical fiber being of a predetermined handedness, the chiral optical fiber having a first end, a second end, a core, having a core refractive index and a core size, disposed along said fiber's longitudinal axis, and a cladding, having a cladding refractive index and a cladding size, surrounding said core, said chiral optical fiber further having a predetermined pitch profile representative of a variation of a helical pitch P of said chiral optical fiber between said first end and said second end, wherein in accordance with said predetermined pitch profile, at said first end, said chiral optical fiber supports at least one orthogonal elliptically polarized light component of the two orthogonal elliptically polarized components of the first eccentricity, wherein at said second end, said chiral optical fiber supports at least one orthogonal elliptically polarized light component of a second eccentricity, wherein at least a portion of the pitch profile of the novel chiral fiber structure between the first and second ends thereof comprises a helical pitch of a sufficiently short value to cause polarization selective scattering, and wherein_an entry inverse pitch at said first end, is substantially different from an exit inverse pitch at said second end, such that one elliptically polarized component of the incident light entering said first end is substantially scattered, while another elliptically polarized component of the incident light is substantially transmitted and converted to an exit elliptically polarized light component having said second eccentricity different from the first eccentricity.

2. The chiral polarizer of claim 1, wherein said predetermined pitch profile is selected and configured with said exit inverse pitch substantially equal to zero, such that said second eccentricity of said exit elliptically polarized light component is sufficiently high thereby producing an exit linearly polarized light component.

3. The chiral polarizer of claim 1, configured for use with incident light comprising incident light components with said first eccentricity of the incident light components being sufficiently high such that the incident light components are substantially linearly polarized, wherein said predetermined pitch profile is selected and configured with said entry inverse pitch substantially equal to zero.

4. The chiral polarizer of claim 1, wherein said predetermined pitch profile is selected and configured with said entry inverse pitch is greater than said exit inverse pitch, such that said second eccentricity is higher than the first eccentricity.

5. The chiral polarizer of claim 1, wherein said predetermined pitch profile is selected and configured with said exit inverse pitch is greater than said entry inverse pitch, such that said second eccentricity is lower than the first eccentricity.

6. The chiral polarizer of claim 1, configured for use with incident light comprising incident light components with said first eccentricity of the incident light components being sufficiently high such that the incident light components are substantially linearly polarized, wherein said predetermined pitch profile is selected and configured with both said entry and exit inverse pitch substantially equal to zero, and having a higher magnitude therebetween, such that said second eccentricity of said exit elliptically polarized light component is sufficiently high thereby producing an exit linearly polarized light component.

7. The chiral polarizer of Claim 1, wherein an inverse pitch is determined by an expression 1/P, and wherein said inverse pitch is substantially equal to zero at said second end, and wherein said inverse pitch is increased to at least one predetermined magnitude above zero in at least one region between said first and said second ends, such that the incident light entering said first end, exits as a first light component being linearly polarized in a first predetermined orientation within a desired predetermined spectral range, while a second light component of a second predetermined linear polarization orientation is substantially scattered.

8. The chiral polarizer of claim 7, wherein at least one of a core cross section shape, said core size, said core refractive index, said cladding size, said cladding refractive index, and said predetermined pitch profile are selected and configured to achieve a desired extinction ratio in a desired predetermined spectral range.

9. The chiral polarizer of claim 7, wherein said predetermined pitch profile comprises at least one pitch region selected from a group of: a chiral long period grating pitch, a pitch corresponding to a non-resonant scattering band, a pitch region corresponding to a chirped chiral fiber grating, a pitch region corresponding to an apodized chiral fiber grating, a random pitch variation, and a pitch variation determined in accordance with at least one predetermined mathematical function.

10. The chiral polarizer of claim 7, wherein when the incident light comprises a first elliptically polarized light component and a second elliptically polarized light component, prior to exiting said second end, the polarizer substantially converts said first elliptically polarized light component into said first linearly polarized light component of said first predetermined orientation, and substantially scatters said second elliptically polarized light component.

11. The chiral polarizer of claim 10, wherein said predetermined pitch profile is selected such that said scattering of said second elliptically polarized light component is synchronized with conversion of said second elliptically polarized light component into said second linearly polarized light component of said second predetermined orientation.

12. The chiral polarizer of claim 7, wherein said first predetermined orientation is substantially perpendicular to said second predetermined orientation.

13. The chiral polarizer of claim 7, configured for use with incident light comprising incident light components with incident light comprising a first linearly polarized incident light component and a second linearly polarized incident light component, wherein said predetermined pitch profile is selected and configured such that inverse pitch at said first end is substantially equal to zero, thereby minimizing said insertion loss for said first linearly polarized light component within said desired spectral range.

14. The chiral polarizer of claim 13, wherein at least one of a core cross section shape, said core size, said core refractive index, said cladding size, said cladding refractive index, and said predetermined pitch profile are selected and configured to achieve said desired extinction ratio in said desired predetermined spectral range while minimizing said insertion loss.

15. The chiral polarizer of claim 13, wherein said pitch profile is selected and configured such that when entering said first end, said first linearly polarized incident light component is converted into a first elliptically polarized light component, and said second linearly polarized incident light component is converted into a second elliptically polarized light component, wherein, prior to exiting said second end, said first elliptically polarized light component is substantially converted into said first linearly polarized light component of said first predetermined orientation, and said second elliptically polarized light component is substantially scattered.

16. The chiral polarizer of claim 15, wherein said predetermined pitch profile is selected such that said scattering of said second elliptically polarized light component is synchronized with conversion of said second linearly polarized incident light component into said second elliptically polarized light component and subsequent conversion of said second elliptically polarized light component into said second linearly polarized light component of said second predetermined orientation.

17. The chiral polarizer of claim 13, further comprising at least one additional chiral optical fiber positioned in contact with one another sequentially along said chiral optical fiber's longitudinal axis, each having a particular corresponding pitch profile, and each having an inverse pitch value at their entry end and at their exit end substantially equal to zero, thereby optimizing an extinction ratio with respect to said scattered second linearly polarized incident light component.

18. A method for achieving polarization of incident light in a chiral polarizer, comprising the steps of:
(a) providing an elongated chiral optical fiber being of a predetermined handedness, the chiral optical fiber having a first end, a second end, a core, having a core refractive index and a core size, disposed along said fiber's longitudinal axis, and a cladding, having a cladding refractive index and a cladding size, surrounding said core; and
(b) selecting, configuring, and applying, to said chiral optical fiber, a predetermined pitch profile representative of a variation of a pitch P of said chiral optical fiber between said first end and said second end, wherein an inverse pitch is determined by an expression 1/P, wherein, in accordance with said predetermined pitch profile, said inverse pitch is substantially equal to zero at said second end, and wherein said inverse pitch is increased to at least one predetermined magnitude above zero in at least one region between said first and said second ends, such that the incident light entering said first end, exits as a first light component being linearly polarized in a first predetermined orientation within a desired predetermined spectral range, while a second light component of a second predetermined linear polarization orientation is substantially scattered.

19. The chiral polarizer of Claim 1 for improving an extinction ratio of incident light having a first and a second linearly polarized incident light components, while minimizing insertion loss thereof, wherein an inverse pitch is determined by an expression 1/P, and wherein said inverse pitch is substantially equal to zero at each of said first and second ends, and wherein said inverse pitch is increased to at least one predetermined magnitude above zero in at least one region between said first and said second ends, such that of the first and second incident linearly polarized light components entering said first end, only a first exit light component being linearly polarized in a first predetermined orientation within the desired predetermined spectral range with minimized insertion loss exits, while a second exit light component of a second predetermined linear polarization orientation is substantially scattered in accordance with the desired extinction ratio.

20. The chiral polarizer of claim 1 for achieving polarization of incident light, wherein an inverse pitch is determined by an expression 1/P, and wherein a first inverse pitch at said first end is greater than a second inverse pitch at said second end, and wherein said inverse pitch is increased to at least one predetermined magnitude above zero in at least one region between said first and said second ends, such that the incident light entering said first end, exits as a first light component being elliptically polarized in a first predetermined orientation having a handedness opposite said structure handedness, within a desired predetermined spectral range, while a second light component of a second predetermined elliptical polarization orientation is substantially scattered.

21. The chiral polarizer of claim 20, wherein at least one of a core cross section shape, said core size, said core refractive index, said cladding size, said cladding refractive index, and said predetermined pitch profile are selected and configured to achieve the desired extinction ratio in the desired predetermined spectral range.

22. The chiral polarizer of claim 20, wherein said predetermined pitch profile comprises at least one pitch region selected from a group of: a chiral long period grating pitch, a pitch corresponding to a non-resonant scattering band, a pitch region corresponding to a chirped chiral fiber grating, a pitch region corresponding to an apodized chiral fiber grating, a random pitch variation, and a pitch variation determined in accordance with at least one predetermined mathematical function.

23. The chiral polarizer of claim 20, wherein said second inverse pitch is substantially equal to zero.

24. The chiral polarizer of claim 22, wherein said predetermined pitch profile is selected and configured such that inverse pitch at said first end is substantially equal to zero, such that said insertion loss for said first linearly polarized light component is minimized within said desired spectral range.

25. The chiral polarizer of Claim 1 for achieving polarization of incident light, having a first and a second circularly polarized incident light components, wherein an inverse pitch is determined by an expression 1/P, and wherein a first inverse pitch at said first end is greater than a second inverse pitch at said second end, and wherein said inverse pitch is increased to at least one predetermined magnitude above zero in at least one region between said first and said second ends, such that of the first and second incident circularly polarized light components entering said first end, only a first exit light component being elliptically polarized in a first predetermined orientation within the desired predetermined spectral range exits, while a second exit light component of a second predetermined elliptical polarization orientation is substantially scattered.

26. The chiral polarizer of Claim 1 for achieving polarization of incident light having a first and a second linearly polarized incident light components, wherein an inverse pitch is determined by an expression 1/P, and wherein said inverse pitch is substantially equal to zero at said first end, and wherein said inverse pitch is increased to at least one predetermined magnitude above zero in at least one region between said first and said second ends, such that the first linearly polarized incident light component entering said first end, exits as a first exit light component being elliptically polarized in a first predetermined orientation within a desired predetermined spectral range, while the second linear polarized incident light component is substantially scattered.

## Patentansprüche

1. Chiraler Polarisator zum Erreichen einer Polarisation von einfallendem Licht, wobei das einfallende Licht zwei orthogonal elliptisch polarisierte Komponenten einer ersten Exzentrizität hat, aufweisend:
einen langgestreckten chiralen Lichtwellenleiter mit einer vorbestimmten Händigkeit, wobei der chirale Lichtwellenleiter ein erstes Ende, ein zweites Ende, einen Kern mit einem Kern-Brechungsindex und einer Kerngröße, der entlang der Längsachse des Leiters angeordnet ist, und eine Ummantelung mit einem Ummantelungs-Brechungsindex und einer Ummantelungsgröße, die den Kern umgibt, aufweist, wobei der chirale Lichtwellenleiter des Weiteren ein vorbestimmtes Steigungsprofil aufweist, das für eine Änderung einer Spiralsteigung P des chiralen Lichtwellenleiters zwischen dem ersten Ende und dem zweiten Ende repräsentativ ist, wobei gemäß dem vorbestimmten Steigungsprofil der chirale Lichtwellenleiter an dem ersten Ende mindestens eine orthogonal elliptisch polarisierte Lichtkomponente der beiden orthogonal elliptisch polarisierten Komponenten der ersten Exzentrizität unterstützt, wobei der chirale Lichtwellenleiter an dem zweiten Ende mindestens eine orthogonal elliptisch polarisierte Lichtkomponente einer zweiten Exzentrizität unterstützt, wobei zumindest ein Abschnitt des Steigungsprofils der neuen chiralen Faserstruktur zwischen dem ersten und dem zweiten Ende von dieser eine Spiralsteigung von einem ausreichend kurzen Wert aufweist, um eine polarisationsselektive Streuung zu bewirken, und wobei sich eine inverse Eintrittssteigung an dem ersten Ende wesentlich von einer inversen Austrittssteigung an dem zweiten Ende unterscheidet, so dass eine elliptisch polarisierte Komponente des einfallenden Lichts, das in das erste Ende eintritt, im Wesentlichen gestreut wird, während eine andere elliptisch polarisierte Komponente des einfallenden Lichts im Wesentlichen übertragen und in eine elliptisch polarisierte Austrittslichtkomponente umgewandelt wird, bei der sich die zweite Exzentrizität von der ersten Exzentrizität unterscheidet.

2. Chiraler Polarisator nach Anspruch 1, wobei das vorbestimmte Steigungsprofil so ausgewählt und konfiguriert ist, dass die inverse Austrittssteigung im Wesentlichen gleich null ist, so dass die zweite Exzentrizität der elliptisch polarisierten Austrittslichtkomponente ausreichend hoch ist, wodurch eine linear polarisierte Austrittslichtkomponente erzeugt wird.

3. Chiraler Polarisator nach Anspruch 1, der zur Verwendung mit einfallendem Licht konfiguriert ist, aufweisend einfallende Lichtkomponenten, wobei die erste Exzentrizität der einfallenden Lichtkomponenten ausreichend hoch ist, so dass die einfallenden Lichtkomponenten im Wesentlichen linear polarisiert sind, wobei das vorbestimmte Steigungsprofil so ausgewählt und konfiguriert ist, dass die inverse Eintrittssteigung im Wesentlichen gleich null ist.

4. Chiraler Polarisator nach Anspruch 1, wobei das vorbestimmte Steigungsprofil so ausgewählt und konfiguriert ist, dass die inverse Eintrittssteigung größer ist als die inverse Austrittssteigung, so dass die zweite Exzentrizität höher ist als die erste Exzentrizität.

5. Chiraler Polarisator nach Anspruch 1, wobei das vorbestimmte Steigungsprofil so ausgewählt und konfiguriert ist, dass die inverse Austrittssteigung größer ist als die inverse Eintrittssteigung, so dass die zweite Exzentrizität geringer ist als die erste Exzentrizität.

6. Chiraler Polarisator nach Anspruch 1, der zur Verwendung mit einfallendem Licht konfiguriert ist, aufweisend einfallende Lichtkomponenten, wobei die erste Exzentrizität der einfallenden Lichtkomponenten ausreichend hoch ist, so dass die einfallenden Lichtkomponenten im Wesentlichen linear polarisiert sind, wobei das vorbestimmte Steigungsprofil so ausgewählt und konfiguriert ist, dass sowohl die inverse Eintritts- als auch die inverse Austrittssteigung im Wesentlichen gleich null sind, und wobei der Wert zwischen diesen größer ist, so dass die zweite Exzentrizität der elliptisch polarisierten Austrittslichtkomponente ausreichend hoch ist, wodurch eine linear polarisierte Austrittslichtkomponente erzeugt wird.

7. Chiraler Polarisator nach Anspruch 1, wobei eine inverse Steigung durch einen Ausdruck 1/P bestimmt wird und wobei die inverse Steigung an dem zweiten Ende im Wesentlichen gleich null ist, und wobei die inverse Steigung in mindestens einem Bereich zwischen dem ersten und dem zweiten Ende auf mindestens einen vorbestimmten Wert über null erhöht wird, so dass das in das erste Ende eintretende einfallende Licht als eine erste Lichtkomponente, die in einer ersten vorbestimmten Ausrichtung innerhalb eines gewünschten vorbestimmten Spektralbereichs linear polarisiert ist, austritt, während eine zweite Lichtkomponente mit einer zweiten vorbestimmten linearen Polarisationsausrichtung im Wesentlichen gestreut wird.

8. Chiraler Polarisator nach Anspruch 7, wobei mindestens eines von einer Querschnittsform des Kerns, der Kerngröße, dem Kern-Brechungsindex, der Ummantelungsgröße, dem Ummantelungs-Brechungsindex und dem vorbestimmten Steigungsprofil so ausgewählt und konfiguriert ist, dass ein gewünschtes Extinktionsverhältnis in einem gewünschten vorbestimmten Spektralbereich erreicht wird.

9. Chiraler Polarisator nach Anspruch 7, wobei das vorbestimmte Steigungsprofil mindestens einen Steigungsbereich aufweist, der ausgewählt ist aus einer Gruppe von: einer chiralen langperiodischen Gittersteigung, einer einem nicht-resonanten Streuungsband entsprechenden Steigung, einem einem chiralen Chirp-Fasergitter entsprechenden Steigungsbereich, einem einem apodisierten chiralen Fasergitter entsprechenden Steigungsbereich, einer Zufalls-Steigungsvariation sowie einer Steigungsvariation, die gemäß mindestens einer vorbestimmten mathematischen Funktion bestimmt wird.

10. Chiraler Polarisator nach Anspruch 7, wobei, wenn das einfallende Licht eine erste elliptisch polarisierte Lichtkomponente und eine zweite elliptisch polarisierte Lichtkomponente aufweist, der Polarisator die erste elliptisch polarisierte Lichtkomponente vor dem Austritt aus dem zweiten Ende im Wesentlichen in die erste linear polarisierte Lichtkomponente mit der ersten vorbestimmten Ausrichtung umwandelt und die zweite elliptisch polarisierte Lichtkomponente im Wesentlichen streut.

11. Chiraler Polarisator nach Anspruch 10, wobei das vorbestimmte Steigungsprofil so ausgewählt ist, dass die Streuung der zweiten elliptisch polarisierten Lichtkomponente mit der Umwandlung der zweiten elliptisch polarisierten Lichtkomponente in die zweite linear polarisierte Lichtkomponente mit der zweiten vorbestimmten Ausrichtung synchronisiert wird.

12. Chiraler Polarisator nach Anspruch 7, wobei die erste vorbestimmte Ausrichtung im Wesentlichen senkrecht zur zweiten vorbestimmten Ausrichtung ist.

13. Chiraler Polarisator nach Anspruch 7, der zur Verwendung mit einfallendem Licht konfiguriert ist, aufweisend einfallende Lichtkomponenten, wobei das einfallende Licht eine erste linear polarisierte einfallende Lichtkomponente und eine zweite linear polarisierte einfallende Lichtkomponente aufweist, wobei das vorbestimmte Steigungsprofil so ausgewählt und konfiguriert ist, dass die inverse Steigung an dem ersten Ende im Wesentlichen gleich null ist, wodurch der Einfügungsverlust für die erste linear polarisierte Lichtkomponente innerhalb des gewünschten Spektralbereichs minimiert wird.

14. Chiraler Polarisator nach Anspruch 13, wobei mindestens eines von einer Querschnittsform des Kerns, der Kerngröße, dem Kern-Brechungsindex, der Ummantelungsgröße, dem Ummantelungs-Brechungsindex und dem vorbestimmten Steigungsprofil so ausgewählt und konfiguriert ist, dass das gewünschte Extinktionsverhältnis in dem gewünschten vorbestimmten Spektralbereich erreicht wird, während der Einfügungsverlust minimiert wird.

15. Chiraler Polarisator nach Anspruch 13, wobei das Steigungsprofil so ausgewählt und konfiguriert ist, dass, wenn sie in das erste Ende eintritt, die erste linear polarisierte Lichtkomponente in eine erste elliptisch polarisierte Lichtkomponente umgewandelt wird, und die zweite linear polarisierte einfallende Lichtkomponente in eine zweite elliptisch polarisierte Lichtkomponente umgewandelt wird, wobei vor dem Austritt aus dem zweiten Ende die erste elliptisch polarisierte Lichtkomponente im Wesentlichen in die erste linear polarisierte Lichtkomponente mit der ersten vorbestimmten Ausrichtung umgewandelt wird und die zweite elliptisch polarisierte Lichtkomponente im Wesentlichen gestreut wird.

16. Chiraler Polarisator nach Anspruch 15, wobei das vorbestimmte Steigungsprofil so ausgewählt ist, dass die Streuung der zweiten elliptisch polarisierten Lichtkomponente mit der Umwandlung der zweiten linear polarisierten einfallenden Lichtkomponente in die zweite elliptisch polarisierte Lichtkomponente und der anschließenden Umwandlung der zweiten elliptisch polarisierten Lichtkomponente in die zweite linear polarisierte Lichtkomponente mit der zweiten vorbestimmten Ausrichtung synchronisiert wird.

17. Chiraler Polarisator nach Anspruch 13, ferner aufweisend mindestens einen zusätzlichen chiralen Lichtwellenleiter, die in Kontakt zueinander entlang der Längsachse des chiralen Lichtwellenleiters aufeinanderfolgend positioniert sind, wobei diese jeweils ein besonderes entsprechendes Steigungsprofil und jeweils einen inversen Steigungswert an ihrem Eintrittsende und an ihrem Austrittsende im Wesentlichen gleich null aufweisen, wodurch ein Extinktionsverhältnis in Bezug auf die gestreute zweite linear polarisierte Lichtkomponente optimiert wird.

18. Verfahren zum Erreichen einer Polarisation von einfallendem Licht in einem chiralen Polarisator, aufweisend die folgenden Schritte:
(a)Vorsehen eines langgestreckten chiralen Lichtwellenleiters mit einer vorbestimmten Händigkeit, wobei der chirale Lichtwellenleiter ein erstes Ende, ein zweites Ende, einen Kern mit einem Kern-Brechungsindex und einer Kerngröße, der entlang der Längsachse des Leiters angeordnet ist, und eine Ummantelung mit einem Ummantelungs-Brechungsindex und einer Ummantelungsgröße, die den Kern umgibt, aufweist, und
(b)Auswählen, Konfigurieren und Anwenden auf den chiralen Lichtwellenleiter eines vorbestimmten Steigungsprofils, das für eine Änderung einer Steigung P des chiralen Lichtwellenleiters zwischen dem ersten Ende und dem zweiten Ende repräsentativ ist, wobei eine inverse Steigung durch einen Ausdruck 1/P bestimmt wird, wobei die inverse Steigung gemäß dem vorbestimmten Steigungsprofil an dem zweiten Ende im Wesentlichen gleich null ist und wobei die inverse Steigung in mindestens einem Bereich zwischen dem ersten und dem zweiten Ende auf mindestens einen vorbestimmten Wert über null erhöht wird, so dass das in das erste Ende eintretende einfallende Licht als eine erste Lichtkomponente austritt, die in einer ersten vorbestimmten Ausrichtung innerhalb eines gewünschten vorbestimmten Spektralbereichs linear polarisiert ist, während eine zweite Lichtkomponente mit einer zweiten vorbestimmten linearen Polarisationsausrichtung im Wesentlichen gestreut wird.

19. Chiraler Polarisator nach Anspruch 1 zum Verbessern eines Extinktionsverhältnisses von einfallendem Licht mit einer ersten und einer zweiten linear polarisierten einfallenden Lichtkomponente, wobei der Einfügungsverlust von dieser minimiert wird, wobei eine inverse Steigung durch einen Ausdruck 1/P bestimmt wird und wobei die inverse Steigung an jedem des ersten und des zweiten Endes im Wesentlichen gleich null ist, und wobei die inverse Steigung in mindestens einem Bereich zwischen dem ersten und dem zweiten Ende auf mindestens einen vorbestimmten Wert über null erhöht wird, so dass von der ersten und der zweiten linear polarisierten einfallenden Lichtkomponente, die in das erste Ende eintreten, nur eine erste Austrittslichtkomponente, die in einer ersten vorbestimmten Ausrichtung innerhalb des gewünschten vorbestimmten Spektralbereiches linear polarisiert ist, mit minimiertem Einfügungsverlust austritt, während eine zweite Austrittslichtkomponente mit einer zweiten vorbestimmten linearen Polarisationsausrichtung im Wesentlichen gemäß dem gewünschten Extinktionsverhältnis gestreut wird.

20. Chiraler Polarisator nach Anspruch 1 zum Erreichen der Polarisation von einfallendem Licht, wobei eine inverse Steigung durch einen Ausdruck 1/P bestimmt wird, und wobei eine inverse Steigung an dem ersten Ende größer ist als eine zweite inverse Steigung an dem zweiten Ende, und wobei die inverse Steigung in mindestens einem Bereich zwischen dem ersten und dem zweiten Ende auf mindestens einen vorbestimmten Wert über null erhöht wird, so dass das in das erste Ende eintretende einfallende Licht als eine erste Lichtkomponente, die in einer ersten vorbestimmten Ausrichtung mit einer zur Struktur-Händigkeit entgegengesetzten Händigkeit innerhalb eines gewünschten vorbestimmten Spektralbereichs elliptisch polarisiert wird, während eine zweite Lichtkomponente mit einer zweiten vorbestimmten elliptischen Polarisationsausrichtung im Wesentlichen gestreut wird.

21. Chiraler Polarisator nach Anspruch 20, wobei mindestens eines von einer Querschnittsform des Kerns, der Kerngröße, dem Kern-Brechungsindex, der Ummantelungsgröße, dem Ummantelungs-Brechungsindex und dem vorbestimmten Steigungsprofil so ausgewählt und konfiguriert ist, dass das gewünschte Extinktionsverhältnis in dem gewünschten vorbestimmten Spektralbereich erreicht wird.

22. Chiraler Polarisator nach Anspruch 20, wobei das vorbestimmte Steigungsprofil mindestens einen Steigungsbereich aufweist, der ausgewählt ist aus: einer chiralen langperiodischen Gittersteigung, einer einem nicht-resonanten Streuungsband entsprechenden Steigung, einem einem chiralen Chirp-Fasergitter entsprechenden Steigungsbereich, einem einem apodisierten chiralen Fasergitter entsprechenden Steigungsbereich, einer Zufalls-Steigungsvariation sowie einer Steigungsvariation, die gemäß mindestens einer vorbestimmten mathematischen Funktion bestimmt wird

23. Chiraler Polarisator nach Anspruch 20, wobei die zweite inverse Steigung im Wesentlichen gleich null ist.

24. Chiraler Polarisator nach Anspruch 22, wobei das vorbestimmte Steigungsprofil so ausgewählt und konfiguriert ist, dass die inverse Steigung an dem ersten Ende im Wesentlichen gleich null ist, so dass der Einfügungsverlust für die erste linear polarisierte Lichtkomponente innerhalb des gewünschten Spektralbereichs minimiert wird.

25. Chiraler Polarisator nach Anspruch 1 zum Erreichen der Polarisation von einfallendem Licht mit einer ersten und einer zweiten kreisförmig polarisierten einfallenden Lichtkomponente, wobei eine inverse Steigung durch einen Ausdruck 1/P bestimmt wird, und wobei eine erste inverse Steigung an dem ersten Ende größer ist als eine zweite inverse Steigung an dem zweiten Ende, und wobei die inverse Steigung in mindestens einem Bereich zwischen dem ersten und dem zweiten Ende auf mindestens einen vorbestimmten Wert über null erhöht wird, so dass von der ersten und der zweiten kreisförmig polarisierten einfallenden Lichtkomponente, die in das erste Ende eintreten, nur eine erste Austrittslichtkomponente, die in einer ersten vorbestimmten Ausrichtung innerhalb des gewünschten vorbestimmten Spektralbereichs linear polarisiert ist, austritt, während eine zweite Austrittslichtkomponente mit einer zweiten vorbestimmten elliptischen Polarisationsausrichtung im Wesentlichen gestreut wird.

26. Chiraler Polarisator nach Anspruch 1 zum Erreichen der Polarisation von einfallendem Licht mit einer ersten und einer zweiten linear polarisierten einfallenden Lichtkomponente, wobei eine inverse Steigung durch einen Ausdruck 1/P bestimmt wird, und wobei die inverse Steigung an dem ersten Ende im Wesentlichen gleich null ist, und wobei die inverse Steigung in mindestens einem Bereich zwischen dem ersten und dem zweiten Ende auf mindestens einen vorbestimmten Wert über null erhöht wird, so dass die in das erste Ende eintretende erste linear polarisierte einfallende Lichtkomponente als eine erste Austrittslichtkomponente, die in einer ersten vorbestimmten Ausrichtung innerhalb eines gewünschten vorbestimmten Spektralbereichs linear polarisiert ist, austritt, während die zweite linear polarisierte einfallende Lichtkomponente im Wesentlichen gestreut wird.

## Revendications

1. Polariseur chiral pour réaliser une polarisation de lumière incidente, la lumière incidente ayant deux composantes orthogonales elliptiquement polarisées d'une première excentricité, comprenant :
une fibre optique chirale allongée étant d'une chiralité prédéterminée, la fibre optique chirale ayant une première extrémité, une deuxième extrémité, une âme, ayant un indice de réfraction d'âme et une taille d'âme, disposée le long de l'axe longitudinal de ladite fibre, et une enveloppe, ayant un indice de réfraction d'enveloppe et une taille d'enveloppe, entourant ladite âme, ladite fibre optique chirale ayant en outre un profil de pas prédéterminé représentatif d'une variation d'un pas hélicoïdal P de ladite fibre optique chirale entre ladite première extrémité et ladite deuxième extrémité, dans lequel, conformément audit profil de pas prédéterminé, à ladite première extrémité, ladite fibre optique chirale supporte au moins une composante orthogonale elliptiquement polarisée de lumière parmi les deux composantes orthogonales elliptiquement polarisées de la première excentricité, dans lequel, à ladite deuxième extrémité, ladite fibre optique chirale supporte au moins une composante orthogonale elliptiquement polarisée de lumière d'une deuxième excentricité, dans lequel au moins une partie du profil de pas de la nouvelle structure de fibre chirale entre les première et deuxième extrémités de celle-ci comprend un pas hélicoïdal d'une valeur suffisamment courte pour causer une diffusion sélective par polarisation, et dans lequel un pas inverse d'entrée à ladite première extrémité est sensiblement différent d'un pas inverse de sortie à ladite deuxième extrémité, de telle sorte qu'une composante elliptiquement polarisée de la lumière incidente pénétrant à ladite première extrémité est sensiblement diffusée, tandis qu'une autre composante elliptiquement polarisée de la lumière incidente est sensiblement transmise et convertie en une composante elliptiquement polarisée de lumière de sortie ayant ladite deuxième excentricité différente de la première excentricité.

2. Polariseur chiral selon la revendication 1, dans lequel ledit profil de pas prédéterminé est choisi et configuré avec ledit pas inverse de sortie sensiblement égal à zéro, de telle sorte que ladite deuxième excentricité de ladite composante elliptiquement polarisée de lumière de sortie est suffisamment élevée, produisant ainsi une composante linéairement polarisée de lumière de sortie.

3. Polariseur chiral selon la revendication 1, configuré pour une utilisation avec une lumière incidente comprenant des composantes de lumière incidente avec ladite première excentricité des composantes de lumière incidente étant suffisamment élevée pour que les composantes de lumière incidente soient polarisées sensiblement linéairement, dans lequel ledit profil de pas prédéterminé est choisi et configuré avec ledit pas inverse d'entrée sensiblement égal à zéro.

4. Polariseur chiral selon la revendication 1, dans lequel ledit profil de pas prédéterminé est choisi et configuré avec ledit pas inverse d'entrée supérieur audit pas inverse de sortie, de telle sorte que ladite deuxième excentricité est supérieure à la première excentricité.

5. Polariseur chiral selon la revendication 1, dans lequel ledit profil de pas prédéterminé est choisi et configuré avec ledit pas inverse de sortie supérieur audit pas inverse d'entrée, de telle sorte que ladite deuxième excentricité est inférieure à la première excentricité.

6. Polariseur chiral selon la revendication 1, configuré pour une utilisation avec une lumière incidente comprenant des composantes de lumière incidente avec ladite première excentricité des composantes de lumière incidente étant suffisamment élevée pour que les composantes de lumière incidente soient polarisées sensiblement linéairement, dans lequel ledit profil de pas prédéterminé est choisi et configuré avec les deux pas inverses d'entrée et de sortie sensiblement égaux à zéro, et ayant une grandeur plus élevée entre eux, de telle sorte que ladite deuxième excentricité de ladite composante elliptiquement polarisée de lumière de sortie est suffisamment élevée, produisant ainsi une composante linéairement polarisée de lumière de sortie.

7. Polariseur chiral selon la revendication 1, dans lequel un pas inverse est déterminé par une expression 1/P, et dans lequel ledit pas inverse est sensiblement égal à zéro à ladite deuxième extrémité, et dans lequel ledit pas inverse est augmenté jusqu'à au moins une grandeur prédéterminée supérieure à zéro dans au moins une région entre ladite première et ladite deuxième extrémités, de telle sorte que la lumière incidente pénétrant à ladite première extrémité sort comme une première composante de lumière étant linéairement polarisée dans une première orientation prédéterminée au sein d'une plage spectrale prédéterminée désirée, tandis qu'une deuxième composante de lumière d'une deuxième orientation de polarisation linéaire prédéterminée est sensiblement diffusée.

8. Polariseur chiral selon la revendication 7, dans lequel au moins un d'une forme en coupe transversale d'âme, d'une taille de ladite âme, d'un indice de réfraction de ladite âme, d'une taille de ladite enveloppe, d'un indice de réfraction de ladite enveloppe, et dudit profil de pas prédéterminé est choisi et configuré pour parvenir à un rapport d'extinction désiré dans une plage spectrale prédéterminée désirée.

9. Polariseur chiral selon la revendication 7, dans lequel ledit profil de pas prédéterminé comprend au moins une région de pas choisi parmi un groupe : d'un pas de réseau à période chirale longue, d'un pas correspondant à une bande de diffusion non résonante, d'une région de pas correspondant à un réseau de fibres chirales compressé, d'une région de pas correspondant à un réseau de fibres chirales apodisé, d'une variation aléatoire de pas, et d'une variation de pas déterminée conformément à au moins une fonction mathématique prédéterminée.

10. Polariseur chiral selon la revendication 7, dans lequel, lorsque la lumière incidente comprend une première composante elliptiquement polarisée de lumière et une deuxième composante elliptiquement polarisée de lumière, avant la sortie à ladite deuxième extrémité, le polariseur convertit sensiblement ladite première composante elliptiquement polarisée de lumière en ladite première composante linéairement polarisée de lumière de ladite première orientation prédéterminée, et diffuse sensiblement ladite deuxième composante elliptiquement polarisée de lumière.

11. Polariseur chiral selon la revendication 10, dans lequel ledit profil de pas prédéterminé est choisi de telle manière que ladite diffusion de ladite deuxième composante elliptiquement polarisée de lumière est synchronisée avec une conversion de ladite deuxième composante elliptiquement polarisée de lumière en ladite deuxième composante linéairement polarisée de lumière de ladite deuxième orientation prédéterminée.

12. Polariseur chiral selon la revendication 7, dans lequel ladite première orientation prédéterminée est sensiblement perpendiculaire à ladite deuxième orientation prédéterminée.

13. Polariseur chiral selon la revendication 7, configuré pour une utilisation avec une lumière incidente comprenant des composantes de lumière incidente avec une lumière incidente comprenant une première composante linéairement polarisée de lumière incidente et une deuxième composante linéairement polarisée de lumière incidente, dans lequel ledit profil de pas prédéterminé est choisi et configuré de telle sorte que le pas inverse à ladite première extrémité est sensiblement égal à zéro, minimisant ainsi ladite perte d'insertion pour ladite première composante linéairement polarisée de lumière au sein de ladite plage spectrale désirée.

14. Polariseur chiral selon la revendication 13, dans lequel au moins un d'une forme en coupe transversale d'âme, d'une taille de ladite âme, d'un indice de réfraction de ladite âme, d'une taille de ladite enveloppe, d'un indice de réfraction de ladite enveloppe, et dudit profil de pas prédéterminé est choisi et configuré pour parvenir audit rapport d'extinction désiré dans ladite plage spectrale prédéterminée désirée tout en minimisant ladite perte d'insertion.

15. Polariseur chiral selon la revendication 13, dans lequel ledit profil de pas est choisi et configuré de telle manière que, lorsqu'elle pénètre à ladite première extrémité, ladite première composante linéairement polarisée de lumière incidente est convertie en une première composante elliptiquement polarisée de lumière, et ladite deuxième composante linéairement polarisée de lumière incidente est convertie en une deuxième composante elliptiquement polarisée de lumière, dans lequel, avant la sortie à ladite deuxième extrémité, ladite première composante elliptiquement polarisée de lumière est sensiblement convertie en ladite première composante linéairement polarisée de lumière de ladite première orientation prédéterminée, et ladite deuxième composante elliptiquement polarisée de lumière est sensiblement diffusée.

16. Polariseur chiral selon la revendication 15, dans lequel ledit profil de pas prédéterminé est choisi de telle manière que ladite diffusion de ladite deuxième composante elliptiquement polarisée de lumière est synchronisée avec une conversion de ladite deuxième composante linéairement polarisée de lumière incidente en ladite deuxième composante elliptiquement polarisée de lumière et une conversion subséquente de ladite deuxième composante elliptiquement polarisée de lumière en ladite deuxième composante linéairement polarisée de lumière de ladite deuxième orientation prédéterminée.

17. Polariseur chiral selon la revendication 13, comprenant en outre au moins une fibre optique chirale additionnelle positionnée en contact les unes avec les autres séquentiellement le long de l'axe longitudinal de ladite fibre optique chirale, chacune ayant un profil de pas correspondant particulier, et chacune ayant une valeur de pas inverse à leur extrémité d'entrée et à leur extrémité de sortie sensiblement égal à zéro, optimisant ainsi un rapport d'extinction par rapport à ladite deuxième composante linéairement polarisée de lumière incidente diffusée.

18. Procédé de réalisation d'une polarisation de lumière incidente dans un polariseur chiral, comprenant les étapes de :
(a) prévision d'une fibre optique chirale allongée étant d'une chiralité prédéterminée, la fibre optique chirale ayant une première extrémité, une deuxième extrémité, une âme, ayant un indice de réfraction d'âme et une taille d'âme, disposée le long de l'axe longitudinal de ladite fibre, et une enveloppe, ayant un indice de réfraction d'enveloppe et une taille d'enveloppe, entourant ladite âme ; et
(b) sélection, configuration, et application, à ladite fibre optique chirale, d'un profil de pas prédéterminé représentatif d'une variation d'un pas P de ladite fibre optique chirale entre ladite première extrémité et ladite deuxième extrémité, dans lequel un pas inverse est déterminé par une expression 1/P, dans lequel, conformément audit profil de pas prédéterminé, ledit pas inverse est sensiblement égal à zéro à ladite deuxième extrémité, et dans lequel ledit pas inverse est augmenté jusqu'à au moins une grandeur prédéterminée supérieure à zéro dans au moins une région entre ladite première et ladite deuxième extrémités, de telle sorte que la lumière incidente pénétrant à ladite première extrémité sort comme une première composante de lumière étant linéairement polarisée dans une première orientation prédéterminée au sein d'une plage spectrale prédéterminée désirée, tandis qu'une deuxième composante de lumière d'une deuxième orientation de polarisation linéaire prédéterminée est sensiblement diffusée.

19. Polariseur chiral selon la revendication 1 pour améliorer un rapport d'extinction de lumière incidente ayant une première et une deuxième composantes linéairement polarisées de lumière incidente, tout en minimisant une perte d'insertion de celle-ci, dans lequel un pas inverse est déterminé par une expression 1/P, et dans lequel ledit pas inverse est sensiblement égal à zéro à chacune desdites première et deuxième extrémités, et dans lequel ledit pas inverse est augmenté jusqu'à au moins une grandeur prédéterminée supérieure à zéro dans au moins une région entre ladite première et ladite deuxième extrémités, de telle sorte que parmi les première et deuxième composantes linéairement polarisées de lumière incidente pénétrant à ladite première extrémité, seule une première composante de lumière de sortie étant linéairement polarisée dans une première orientation prédéterminée au sein de la plage spectrale prédéterminée désirée avec une perte d'insertion minimisée sort, tandis qu'une deuxième composante de lumière de sortie d'une deuxième orientation de polarisation linéaire prédéterminée est sensiblement diffusée conformément au rapport d'extinction désiré.

20. Polariseur chiral selon la revendication 1 pour réaliser une polarisation de lumière incidente, dans lequel un pas inverse est déterminé par une expression 1/P, et dans lequel un premier pas inverse à ladite première extrémité est supérieur à un deuxième pas inverse à ladite deuxième extrémité, et dans lequel ledit pas inverse est augmenté jusqu'à au moins une grandeur prédéterminée supérieure à zéro dans au moins une région entre ladite première et ladite deuxième extrémités, de telle sorte que la lumière incidente pénétrant à ladite première extrémité sort comme une première composante de lumière étant elliptiquement polarisée dans une première orientation prédéterminée ayant une chiralité opposée à la chiralité de ladite structure, au sein d'une plage spectrale prédéterminée désirée, tandis qu'une deuxième composante de lumière d'une deuxième orientation de polarisation elliptique prédéterminée est sensiblement diffusée.

21. Polariseur chiral selon la revendication 20, dans lequel au moins un d'une forme en coupe transversale d'âme, d'une taille de ladite âme, d'un indice de réfraction de ladite âme, d'une taille de ladite enveloppe, d'un indice de réfraction de ladite enveloppe, et dudit profil de pas prédéterminé est choisi et configuré pour parvenir au rapport d'extinction désiré dans la plage spectrale prédéterminée désirée.

22. Polariseur chiral selon la revendication 20, dans lequel ledit profil de pas prédéterminé comprend au moins une région de pas choisi parmi un groupe : d'un pas de réseau à période chirale longue, d'un pas correspondant à une bande de diffusion non résonante, d'une région de pas correspondant à un réseau de fibres chirales compressé, d'une région de pas correspondant à un réseau de fibres chirales apodisé, d'une variation aléatoire de pas, et d'une variation de pas déterminée conformément à au moins une fonction mathématique prédéterminée.

23. Polariseur chiral selon la revendication 20, dans lequel ledit deuxième pas inverse est sensiblement égal à zéro.

24. Polariseur chiral selon la revendication 22, dans lequel ledit profil de pas prédéterminé est choisi et configuré de telle manière qu'un pas inverse à ladite première extrémité est sensiblement égal à zéro, de telle sorte que ladite perte d'insertion pour ladite première composante linéairement polarisée de lumière est minimisée au sein de ladite plage spectrale désirée.

25. Polariseur chiral selon la revendication 1 pour réaliser une polarisation de lumière incidente, ayant une première et une deuxième composantes circulairement polarisées de lumière incidente, dans lequel un pas inverse est déterminé par une expression 1/P, et dans lequel un premier pas inverse à ladite première extrémité est supérieur à un deuxième pas inverse à ladite deuxième extrémité, et dans lequel ledit pas inverse est augmenté jusqu'à au moins une grandeur prédéterminée supérieure à zéro dans au moins une région entre ladite première et ladite deuxième extrémités, de telle sorte que, parmi les première et deuxième composantes circulairement polarisées de lumière incidente pénétrant à ladite première extrémité, seule une première composante de lumière de sortie étant elliptiquement polarisée dans une première orientation prédéterminée au sein de la plage spectrale prédéterminée désirée sort, tandis qu'une deuxième composante de lumière de sortie d'une deuxième orientation de polarisation elliptique prédéterminée est sensiblement diffusée.

26. Polariseur chiral selon la revendication 1 pour réaliser une polarisation de lumière incidente, ayant une première et une deuxième composantes linéairement polarisées de lumière incidente, dans lequel un pas inverse est déterminé par une expression 1/P, et dans lequel ledit pas inverse est sensiblement égal à zéro à ladite première extrémité, et dans lequel ledit pas inverse est augmenté jusqu'à au moins une grandeur prédéterminée supérieure à zéro dans au moins une région entre ladite première et ladite deuxième extrémités, de telle sorte que la première composante linéairement polarisée de lumière incidente pénétrant à ladite première extrémité sort comme une première composante de lumière de sortie étant elliptiquement polarisée dans une première orientation prédéterminée au sein d'une plage spectrale prédéterminée désirée, tandis que la deuxième composante linéairement polarisée de lumière incidente est sensiblement diffusée.
